# EUROPEAN PATENT APPLICATION

(11) **EP 2 868 788 A1**
(43) Date of publication of application: **06.05.2015**
(21) Application number: 14195441.2
(22) Date of filing: 21.04.2009
(51) Int. Cl.: D02G 3/44, B66C 1/12

(54) **Abrasion resistant fabric**

(30) Priority: 22.04.2008 EP 08007751
(62) Divisional of application: 09735826.1
(71) Applicant: DSM IP Assets B.V., 6411 TE Heerlen (NL)
(72) Inventor: Schneiders, Hans, 6271 AH Gulpen (NL); Weelen, Frank, 6471 AX Eygelshoven (NL); Wetzels, Karel Jozef, 6462 BD Kerkrade (NL)
(74) Representative: Zuideveld, Mihaela

(57) **Abstract**

The invention relates to an abrasion resistant fabric containing ultra high molecular weight polyethylene (UHMWPE) filaments, thermotropic liquid crystal polymers (LCP) and natural filaments, the use thereof as protective means and to a protective cover containing said fabric. In particular, the invention relates to a rope and to a roundsling containing the protective cover.

## Description

The invention relates to an abrasion resistant fabric containing ultra high molecular weight polyethylene (UHMWPE) filaments, the use thereof as protective means and to a protective cover containing said fabric. In particular, the invention relates to a rope and to a roundsling containing the protective cover.

A fabric containing UHMwPE filaments is known. For example, such a fabric and its use as a protective cover for a roundsling are disclosed in WO 2007/071310. The fabric imparts the protective cover good mechanical and physical properties as for example resistance against abrasion or mechanical impacts. It also imparts said cover with resistance against external influences, e.g. UV-light, ingress of dirt and the like. Accordingly, the service life of the roundsling containing the protective cover is increased.

Although the known fabrics containing UHMwPE filaments have favorable properties, there is a constant demand for further improvement. In particular, there is a need for a fabric having yet further improved abrasion resistance.

The aim of the invention is to provide a further improved fabric containing UHMwPE filaments and in particular to provide such a fabric having an abrasion resistance never achieved hitherto.

Surprisingly the aim of the invention is achieved with a fabric that contains UHMwPE filaments and thermotropic liquid crystal polymer (LCP) filaments.

It was surprisingly found that the fabric of the invention presents an unexpectedly improved abrasion resistance never achieved to inventor's knowledge hitherto.

This unexpected increase in the abrasion resistance of the fabric of the invention comes even more as a surprise since the abrasion resistance of a fabric consisting of only UHMwPE filaments or consisting of only thermotropic LCP filaments is much lower than the abrasion resistance of the fabric of the invention. Hence, it is clearly the synergistic effect between the UHMwPE filaments and thermotropic LCP filaments which provides the fabric of the invention with the increased abrasion resistance.

A further advantage of the fabric of the invention is that said fabric can be produced with lower costs, because part of the expensive UHMwPE filaments are replaced with much cheaper thermotropic LCP filaments.

The above-mentioned WO 2007/071310 discloses protective covers containing filaments manufactured from UHMwPE, aromatic polyamide, aromatic polyester or polybisoxazole. However, this publication neither discloses a fabric containing the specific combination of UHMwPE and thermotropic LCP filaments, nor the synergistic effect thereof.

By filament is herein understood an elongated body having a continuous length, the length dimension of which is much greater than the transverse dimensions of width and thickness. The cross-section of the filaments may vary widely; they may be circular, flat or oblong, regular or irregular in cross-section. Good results are obtained if the filaments are circular in cross-section. The filaments may also be staple filaments; however, best results in terms of abrasion resistance are obtained if the filaments have a continuous length.

By a fabric, which in the art is also called textile or cloth, is herein understood a sheet-like structure comprising interlaced filaments, said fabric having a thickness much smaller than its other two dimensions, i.e. the axial dimension and the transversal dimension. A fabric clearly distinguishes itself from other structures containing interlace filaments such as for example yarns or ropes which are not sheet-like but rather having a cylindrical shape with both transversal dimensions much smaller than their length. A further distinguishing feature is that for example in a rope most of the filaments are positioned inside the rope and not being exposed to the surface, therefore not contributing to the surface properties, e.g. abrasion resistance, of the rope.

By abrasion resistance of a fabric is herein understood resistance against for example processes of rubbing away, abrading, eroding, grinding or wearing down by means of friction with other objects. Therefore, abrasion is more a process that occurs during the utilization of the fabric in dynamic processes, i.e. where movements causing friction are involved, and not in static processes where a stress is constantly applied and which causes for example fabric fatigue.

The fabric of the invention may be of any construction known in the art, e.g. woven, knitted, plaited, braided or non-woven or combinations thereof. Woven fabrics may include plain weave, rib, matt weave and twill weave fabrics and the like. Knitted fabrics may be weft knitted, e.g. single- or double-jersey fabric or warp knitted. An example of a non-woven fabric is a felt fabric. Further examples of woven, knitted or non-woven fabrics as well as the manufacturing methods thereof are described in *"*Handbook of Technical Textiles", ISBN 978-1-59124-651-0 at chapters 4, 5 and 6, the disclosure thereof being incorporated herein as reference. A description and examples of braided fabrics are described in the same Handbook at Chapter 11, more in particular in paragraph 11.4.1, the disclosure thereof being incorporated herein as reference.

Preferably, the fabric of the invention is a knitted fabric, more preferably a woven fabric as such fabrics show improved abrasion resistance.

In a further preferred embodiment, the fabric of the invention is a braided fabric; more preferably, the fabric of the invention is braided from a tape- or a band-like construction comprising UHMwPE and thermotropic LCP filaments. It was observed that such a fabric has a further increased abrasion resistance. Good examples of a tape- or a band-like construction suitable for the purpose of the invention are a webbing or a hollow tubular braid that is laid flat. Good results are obtained if a webbing is used having a width/thickness ratio of at least 2, more preferably at least 3.5, most preferably at least 5. Said width/thickness ratio is preferably at most 20, more preferably at most 15, most preferably at most 10.

The fabric of the invention may also be a 3-dimensional (3D) fabric; that is the fabric contains strands comprising filaments that run and cross each other in 3 directions. 3D fabrics are known in the art, and can be made with different textile techniques; including knitting, stitching, braiding and/or weaving. More preferably, the fabric is a 3D woven fabric, comprising warp, weft and binder strands or threads; more preferably the fabric of the invention is a 3D hollow woven fabric (in hollow tubular form). Such hollow fabric can be made with e.g. a 20 circular (or round) weaving technique or with a multi-layer flat weaving technique wherein the layers are connected at the edges to form the wall of a tubular construction. In a further preferred embodiment of the invention, the fabric is a multi-layered woven construction comprising at least 2 woven layers interconnected by binder threads, more preferably between 3 and 9 interconnected layers, optionally made in hollow tubular form. The warp, weft and binder threads can be single-, but also multi-stranded.

The fabric of the invention may be coated or contain flame retardants, coatings to reduce adhesion, colorants, delusterants, and the like.

The thickness of the fabric of the invention can vary widely being for instance determined by the use of the product employing said fabric. In general the abrasion resistance will increase with increasing the thickness of the fabric, however with increasing the thickness the manufacturing costs will also increase. The skilled person knows how to choose the optimal thickness of the fabric in view of the demands.

Preferably, the amount of the UHMwPE filaments in the fabric of the invention is between 20 and 98 mass%, more preferably between 50 and 95 mass%, even more preferably between 60 and 90 mass%, most preferably between 65 and 85 mass% from the mass consisting of UHMwPE filaments and thermotropic LCP filaments. The remaining mass% (up to 100 mass%) from said mass consists of thermotropic LCP filaments.

Thermotropic liquid crystal polymers are described in Handbook of fibre rope technology, ISBN 1 85573 6063, pages 50 and 51. Thermotropic liquid crystal polymers used to produce the thermotropic LCP filaments refer to aromatic polyesters that can be melted and associated in liquid crystals. Preferably the polymer is a naphthalene based thermotropic based LCP. Most preferably the thermotropic LCP is produced by the copolymerisation of p-hydroxybenzoic acid and 6-hydroxy-2-naphthoic. Yarns containing these thermotropic LCP filaments are sold under the trade mark Vectran® by Celanese Corporation.

Preferably, the UHMwPE used to manufacture the UHMwPE filaments has an intrinsic viscosity (IV) of preferably at least 3 dl/g, more preferably at least 4 dl/g, most preferably at least 5 dl/g. Preferably the IV is at most 40 dl/g, more preferably at most 25 dl/g, more preferably at most 15 dl/g. Preferably, the UHMWPE has less than 1 side chain per 100 C atoms, more preferably less than 1 side chain per 300 C atoms.

The UHMwPE filaments may be manufactured according to any technique known in the art, e.g. by melt, solution or gel spinning. Preferably the UHMWPE filaments are manufactured according to a gel spinning process as described in numerous publications, including EP 0205960 A, EP 0213208 A1, US 4413110, GB 2042414 A, GB-A-2051667, EP 0200547 B1, EP 0472114 B1, WO 01/73173 A1, EP 1,699,954 and in *"*Advanced Fibre Spinning Technology", Ed. T. Nakajima, Woodhead Publ. Ltd (1994), ISBN 185573 182 7.

The UHMwPE filaments may further contain small amounts, generally less than 5 mass%, preferably less than 3 mass% of customary additives, such as anti-oxidants, thermal stabilizers, colorants, flow promoters, etc. The UHMwPE can be a single polymer grade, but also a mixture of two or more different polyethylene grades, e.g. differing in IV or molar mass distribution, and/or type and number of comonomers or side chains.

Preferably, the thermotropic LCP filaments have a tensile strength of at least 1 GPa, preferably at least 1.5 GPa, more preferably at least 2 GPa, even more preferably at least 2.5 GPa, most preferably at least 3 GPa. Preferably, the UHMWPE filaments have a tensile strength of at least 1 GPa, preferably at least 1.5 GPa, more preferably at least 2 GPa, even more preferably at least 3 GPa, yet even more preferably at least 4 GPa, most preferably at least 5 GPa.

The fabric of the invention may also contain other filaments, e.g. natural filaments or filaments of synthetic polymers. Examples of natural filaments include filaments of cotton, hemp, wool, silk, jute, linen and the like. Examples of filaments of synthetic polymers include filaments manufactured for example from polyamides and polyaramides, e.g. poly(p-phenylene terephthalamide) (known as Kevlar®); poly(tetrafluoroethylene) (PTFE); poly{2,6-diimidazo-[4,5b-4',5'e]pyridinylene-1,4(2,5-dihydroxy)phenylene} (known as M5); poly(hexamethyleneadipamide) (known as nylon 6,6), poly(4-aminobutyric acid) (known as nylon 6); polyesters, e.g. poly(ethylene terephthalate), poly(butylene terephthalate), and poly(1,4 cyclohexylidene dimethylene terephthalate); polyvinyl alcohols; but also polyolefins others then UHMwPE, e.g. homopolymers and copolymers of polypropylene. The mass% of other filaments in the fabric of the invention is calculated from the total mass of filaments in the fabric and is preferably less than 2 mass%, more preferably less than 1 mass%, most preferably less than 0.5 mass%. The total mass of filaments in the fabric is obtained by adding to the mass consisting of UHMWPE and thermotropic LCP filaments the masses consisting of other filaments. In the most preferred embodiment, the total mass of filaments in the fabric of the invention consists of UHMwPE filaments and thermotropic LCP filaments.

Most straightforward way of changing the mass% of UHMwPE or thermotropic LCP filaments in the fabric of the invention is to use in the manufacturing process of said fabric, yarns containing UHMwPE filaments, hereafter UHMwPE yarns, and yarns containing thermotropic LCP filaments, hereafter LCP yarns, and to vary the amounts of said yarns as desired. By yarn is herein understood an elongated body having a length much greater than its cross-section and comprising a plurality of continuous and/or discontinuous filaments, said filaments being preferably aligned substantially parallel to each other.

Another possibility is to mix continuous and/or discontinuous filaments of UHMwPE and of thermotropic LCP in the desired mass% to form a hybrid yarn which is then used to produce the fabric of the invention. The advantage of using a hybrid yarns instead of separate UHMwPE and LCP yarns is that the properties, e.g. abrasion resistance, stiffness and strength, of the obtained product can be more precisely tuned and the manufacturing process thereof is simplified. Preferably, the hybrid yarn is produced by mixing at least one UHMwPE yarn with at least one LCP yarn into the hybrid yarn. By mixing filaments or yarns is herein understood that the filaments or the yarns are combined to form a single yarn. The hybrid yarn may also be twisted after the mixing thereof. Preferably, at least 2 yarns, more preferably at least 4 yarns of each sort are used to form the hybrid yarn; most preferably the number of yarns is chosen depending by the application for which the fabric of the invention is intended. Preferably, the titer of said yarns is at least 100 denier, more preferably at least 1.000 denier, yet even more preferably at least 5.000 denier, most preferably at least 10.000 denier.

The invention also relates to a hybrid yarn containing continuous and/or discontinuous UHMwPE filaments and thermotropic LCP filaments. Preferably the amount of the UHMwPE filaments in the yarn is between 30 and 98 mass%, more preferably between 50 and 95 mass%, even more preferably between 60 and 90 mass%, most preferably between 65 and 85 mass% from the mass of filaments consisting of UHMwPE filaments and thermotropic LCP filaments. The hybrid yarn of the invention may also contain other filaments like those enumerated herein above and it may be twisted preferably with at least 5 turns/m, more preferably with at least 10 turns/m, most preferably with at least 15 turns/m and preferably at most 50 turns/m. The benefit of the hybrid yarn of the invention is that a fabric or a product manufactured thereof has an abrasion resistance never achieved hitherto.

The invention further relates to a tape- or a band-like construction, more in particular to a webbing, comprising continuous and/or discontinuous UHMwPE and thermotropic LCP filaments. Such webbing is preferably produced with the method disclosed in EP 1,456,462 included hereby for reference. Preferably, said construction is manufactured from the hybrid yarn of the invention. The tape- or a band-like construction of the invention may also contain other filaments like those enumerated hereinabove.

The invention also relates to the use of the fabric of the invention as protective means for example against damage caused by abrasive forces or other mechanical forces.

The invention further relates to a protective cover comprising the fabric of the invention.

Because of the improved abrasion resistance of the fabric of the invention, protective covers containing said fabric may be designed with a lower thickness than known covers while having the same level of abrasion resistance. In this way the total weight of a product, e.g. a rope or a roundsling, containing the protective cover of the invention is reduced. It was also surprisingly found that the contribution of the cover to the stiffness of the product, in particular if the product is a rope or a roundsling, is reduced.

A protective cover is a covering that is intend to protect an item from damage or in case of an article of apparel, to protect the person wearing that article from injury. Examples of protective covers include screens or blinds intended to keep things out or hinder sight; armguards or bracers intended to protect the wrist or arm against mechanical impacts; caps; coasters to protect furniture; claddings, facings or roofs intended for example to protect the outside or the top of a building; linings protecting an inside surface; shades to protect from sunlight; aircraft covers; camouflage covers and the like. The invention also relates to the above enumerated examples of protective covers containing the fabric of the invention.

Apart of the increased abrasion resistance, the advantage thereof is that the protective cover of the invention is effective in blocking the sun's damaging UV rays that can fade interior and exterior surfaces without loosing its other properties. A further advantage is that said cover has a good resistance against acid rain, birds' droppings, tree sap and other forms of environmental pollution. Yet a further advantage is that said cover is effective in holding out dirt and dust particles as well as provides superior water resistance while allowing moisture to escape.

In the most preferred embodiment of the invention, the protective cover is used to protect ropes or roundslings against abrasion and other mechanical impacts. According to this embodiment, the protective cover of the invention has a hollow, tubular form and it encloses the rope or the core of the roundsling that need to be protected. Preferably, the inside diameter of the hollow, tubular cover is about equal with the diameter of the rope or of the core of the roundsling. The advantage thereof is that a good fixation of the cover on the rope or roundsling is achieved.

The hollow, tubular form can be obtained for example by folding a piece of fabric of suitable size and subsequently connecting the ends of the fabric. To facilitate the connection, the ends of the fabric may overlap. To connect the ends any suitable connecting means may be used, e.g. adhesives, stitches, Velcro, zippers and the like.

In a preferred embodiment of the invention, the cover has been made directly into a hollow, tubular form by a suitable textile technique, e.g. weaving, knitting or braiding. More preferably, the cover is a hollow, tubular braid. Even more preferably, the hollow, tubular braid is braided from a tape- or a band-like construction comprising filaments. It was observed that such covers provide increased abrasion resistance.

Subsequently, the rope or the core of the roundsling is introduced into the tubular cover. It is also possible to build the cover directly around the rope or the core of the roundsling to be protected.

In a more preferred embodiment of the invention, the hollow, tubular cover is directly made by braiding around a rope or a roundsling's core. The skilled person knows how to manufacture such products, e.g. by using a braiding machine having the required capabilities as for example a Herzog SENG 1/24 - '40 braider machine. The advantage thereof is that a cover with a good fit on the rope or the roundsling can be produced.

The invention further relates to a rope containing the protective cover of the invention and to a roundsling containing the protective cover of the invention.

A rope or a roundsling according to the invention shows a strongly improved resistance to abrasion. Especially the resistance to external abrasion caused by cutting or sawing action of metal objects is very much improved. In case of roundslings, this is for example important in hoisting of metal coils which usually have sharp edges. In case of ropes this is for example important when the rope of the invention is used as a mooring line, in particular to moor docking ships or as a deep sea mooring line. A docking ship is under a continuous heave-pitch motion due to water waves, causing a continuous abrasion between the mooring line and the metal parts of the ship in contact thereof. The rope of the invention shows increased resistance to abrasion when used as a mooring line. When used as deep sea mooring lines as for example for the mooring of oil production platforms, the rope of the invention is to be able to withstand steel cables of fishing nets accidentally sliding along and exercising a sawing action thereof.

It was further found that a rope or a roundsling of the invention shows an increased service life being also less prone for failure. Failure, like breakage, may cause dangerous situations, for example in cases when the rope or the roundsling are used in hoisting operations. An increase in service life is important for example for mooring lines, heavy duty roundslings and the like, because once mounted such products need less maintenance and checking, decreasing therefore the overall costs coupled with such activities. An increase in service life also allows the use of ropes or roundslings of the invention in even more demanding applications replacing for example steel wires.

The rope or the roundsling of the invention is preferably entirely surrounded by the cover. The cover may have an open, net-like structure. Preferably the cover has a closed structure to provide improved abrasion resistance.

The rope may be a single core or a multi-core rope. In a multi-core rope the rope contains a core containing a plurality of parallel or essentially parallel strands, the core being surrounded by the cover. In this way a rope is obtained that is very strong, has a low weight and is highly resistant to abrasion. In one preferred embodiment the rope has a diameter of at least 5 mm, more preferably at least 15 mm, most preferably at least 50 mm. Thinner ropes are very suitable for mooring smaller ships, like yachts etc. or for use as running rigging on boats and yachts. Thicker ropes may be hoisting lines, lines for tugging, mooring lines for ships in harbors, mooring lines for oil production installations and the like.

The roundsling comprises an endless load-bearing core, the core preferably containing multiple turns of a rope or a strand material. Preferably the roundsling is a heavy duty roundsling having a vertical working load limit (WLL linear) in the range above 10 metric tons (mt; WLL according to NEN EN 1492-2; note that in Europe a safety or design factor of 7/1 is used vs. 5/1 in the US and 6/1 in Asia).

The ropes and roundslings may be manufactured from known materials usually used in ropes and roundslings manufacturing. Examples of such materials include natural materials or synthetic polymers as enumerated above. Preferably the rope or the load-bearing core of the roundsling of the invention contains UHMwPE filaments produced most preferably by the gel spinning process as explained above. Most preferably the rope or the load-bearing core of the roundsling of the invention essentially consists of gel spun UHMwPE filaments.

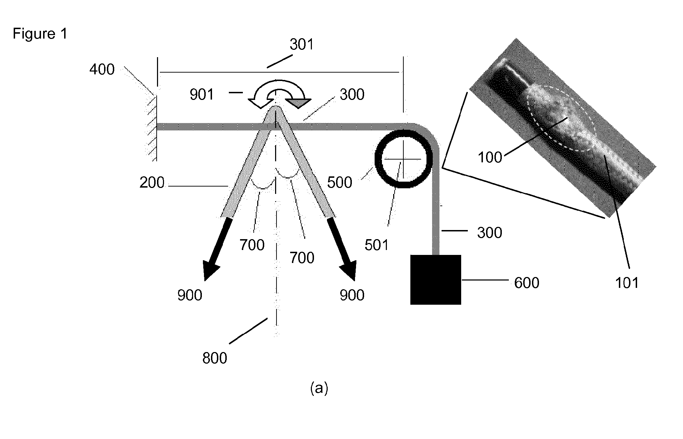

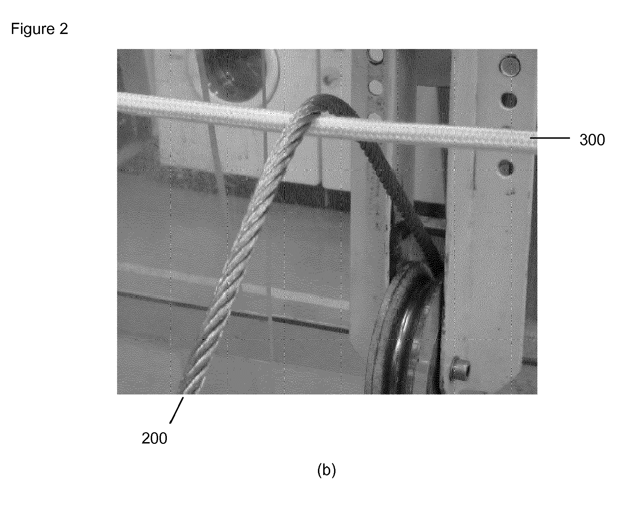

Figure 1 a) schematically depicts the setup used to quantify the abrasion resistance of the fabric of the invention and b) is a photo image of the used set-up.

The invention is further explained in the examples, without being restricted thereto.

### METHODS

▪ IV for UHMWPE is determined according to ASTM D4020 at 135°C using decalin as solvent for UHMWPE in accordance with said ASTM standard.
▪ Tensile strength (or strength) and tensile modulus (or modulus) are defined and determined on multifilament yarns with a procedure in accordance with ASTM D 885M, using a nominal gauge length of the yarn of 500 mm, a crosshead speed of 50%/min and Instron 2714 clamps, of type Fibre Grip D5618C. On the basis of the measured stress-strain curve the modulus is determined as the gradient between 0.3 and 1% strain. For calculation of the modulus and strength, the tensile forces measured are divided by the titer; for UHMWPE yarns, values in GPa are calculated assuming a density of polyethylene of 0.97 g/cm³. For LCP yarns, values in GPa are calculated assuming a density of thermotropic LCP of 1.4 g/cm³.
▪ Titre of a yarn is determined by weighing 10 meters of the yarn and transform the obtained value in denier (grams per 9000 meters) or dTex (grams per 10000 meters).
▪ Abrasion resistance of a fabric was measured as depicted in Figure 1 by using a load bearing element, which for this particular test was a rope (100), covered with the fabric (101) having a hollow, tubular form and braided directly onto the rope and subjecting it to a cyclic, abrasive sawing-like motion (as shown by arrows 901) from a metal wire (200). The abrasion resistance was defined as the number of forth and back cycles necessary to expose the covered load bearing element at the location subjected to abrasion from said wire, without the necessity of complete exposure or complete rupture of the fabric.
   The hollow, tubular fabric was single wall braided directly around the rope with a 24 strand Herzog® SENG 1/24 - 140 braider machine from Herzog Flechtmaschinen, Oldenburg, De; the braiding period was 40 mm (30 stitches/100 mm) and the braiding speed was 100 cm/min. The wall thickness of the cover was about 1 mm and the inside diameter of the hollow, tubular fabric was chosen to match the diameter of the rope. A sample piece (300) of 3 m was cut from the rope covered with the braided fabric, directly after braiding the cover without winding or spooling the covered rope. The ends of the covered rope were dipped over a few millimeters in Bison® contact glue (e.g. Bison glue code 6301167/01) for about 2 seconds and the glue left to solidify in order to prevent fraying of the ends of the rope and of the fabric. After the glue solidified, the ends were dipped over a length of about 500 mm into LAGO-45, a well-known bitumen based coating solution from I-Coats. The sample was then allowed to dry for about 3 days.
   After drying, the sample (300) was mounted by attaching one of its ends to a fixed support (400), pulling the other end over a pulley (500) and attaching a weight (600) of 1000 kg thereof. The part (301) of the sample between the fixed support and the pulley was substantially horizontal and the center (501) of the pulley was at a distance of about 1.20 m from the fixed support. The horizontal part (301) was then abraded at room temperature by maneuvering thereupon in a cyclic, sawing motion a stainless steel cable (200) of 10 mm diameter. The stainless steel cable was untreated and had 7 strands of which a Nylon® strand as the core and 6 stainless steel strands surrounding thereof, the strands having 3mm diameter and being twisted with 1 twist per 7.0 cm. The cable was at an angle (700) of 120° with respect to the vertical (800) and positioned about in the middle of the horizontal part (301) of the sample. The frequency of the cable movement was 1,0 Hz with a stroke length, i.e. the length of steel cable moving over the surface of the sample, of 200 mm. The steel cable was subjected to a constant load by pulling at its ends with a force (900) of 40 kg.

### EXAMPLE 1

A commercially available rope (12 strand Dynaone, produced by Gleistein) of 10 mm diameter and breaking strength of 85 kN, was covered with a fabric braided as explained above in the METHODS section.

To braid the fabric, 24 hybrid yarns were used in the braiding machine, said hybrid yarns being obtained by mixing two commercially available UHMWPE yarns of 1760 dtex known as Dyneema® SK75 (from DSM Dyneema, NL) with one commercially available thermotropic LCP yarn of 1500 denier known as Vectran® HT1500 (from Kuraray Co. Ltd.). The yarns were mixed into the hybrid yarn without twisting them together, although a slight individual yarn twist might have occurred when unwinding them from the individual bobbins.

The mass% of UHMWPE and thermotropic LCP filaments in the fabric was about 67 % and 33 %, respectively.

The abrasion resistance of the covered rope was tested according to the method detailed above in the METHODS section. The results are given in Table 1.

### EXAMPLE 2

Example 1 was repeated; however the hybrid yarn contained one Dyneema® SK75 yarn and two Vectran® HT1500 yarns. The mass% of UHMWPE and thermotropic LCP filaments in the fabric was about 34 % and 66 %, respectively.

The abrasion resistance of the covered rope was tested. The results are given in Table 1.

### Example 3

Example 1 was repeated; however the hybrid yarn contained one Dyneema® SK75 yarn and three Vectran® HT1500 yarns. The mass% of UHMWPE and thermotropic LCP filaments in the fabric was about 26 % and 74 %, respectively.

The abrasion resistance of the covered rope was tested according to the method detailed above in the METHODS section. The results are given in Table 1.

### Example 4

A commercially available rope (12 strand Dynaone, produced by Gleistein) of 20 mm diameter and breaking strength of 400 kN, was covered with a fabric braided as detailed above in the METHODS section.

To braid the fabric, a webbing tape-like construction was used having about 1.8 mm thickness and 9.5 mm width. The webbing was produced from a hybrid yarn consisting of 5 of the Dyneema® SK75 yarns and 2 of the Vectran® HT1500 yarns. The hybrid yarn used as the warp yarn of the webbing was twisted with a twist of 15 turns/m (Z) while the hybrid yarn used as the weft yarn of the webbing had a twist of 20 turns/m (Z). The webbing had 6 warp hybrid yarns and it was a plane weave 1:1 construction (manufactured by KBF Geldrop, the Netherlands). The structure of the webbing is depicted in the Handbook of Technical Textiles, ISBN 978-1-59124-651-0 at chapter 4, Figure 4.1 included herein for reference.

The construction of the webbing was identical with the commercially available OTS Protective Jacket manufactured and sold by Offshore & Trawl Supplies (www.otsas.no/products/protective.htm).

The fabric was braided by using 24 webbing tape-like constructions as the above in the braiding machine.

The mass% of UHMWPE and thermotropic LCP filaments in the fabric was about 72 % and 28 %, respectively.

The abrasion resistance of the covered rope was tested according to the method detailed above in the METHODS section. The results are given in Table 2.

### Example 5

Example 4 was repeated with the webbing of Example 4 produced however from 5 Dyneema® SK75 yarns and 3 Vectran® HT1500 yarns.

The mass% of UHMWPE and thermotropic LCP filaments in the fabric was about 64 % and 36 %, respectively.

The abrasion resistance of the covered rope was tested according to the method detailed above in the METHODS section. The results are given in Table 2.

### Comparative experiment A.

Example 1 was repeated, however, instead of the hybrid yarn, 24 strands were used to braid the fabric, each strand consisting of three Dyneema® SK75 yarns. The abrasion resistance of the covered rope was tested according to the method detailed above in the METHODS section. The results are given in Table 1.

### Comparative experiment B.

Example 4 was repeated, however only Dyneema® SK75 yarns were used to manufacture the webbing. Results are given in Table 2.

From the above Examples and Comparative experiments, it can be clearly seen that the fabric of the invention shows a markedly improved abrasion resistance with about 6% in case of Example 3 and with an impressive 115% for Example 1. Also a large increase with about 90% was obtained when the fabric of the invention was manufactured from webbings according to Example 4. Therefore, the Examples of the present invention clearly show the synergistic effect between the UHMWPE and thermotropic LCP filaments on the abrasion resistance of the inventive fabric.

**Table 1**

| Experiment number | Braided fabric from hybrid yarns | | Abrasion test (number of cycles) |
|---|---|---|---|
| | Dyneema® SK75 | Vectran® HT1500 | |
| | (mass%) | (mass%) | |
| 1 | 67 | 33 | 330 |
| 2 | 34 | 66 | 206 |
| 3 | 26 | 74 | 162 |
| Comp. exp. A | 100 | 0 | 153 |

**Table 2**

| Experiment number | Braided fabric from webbings | | Abrasion test (number of cycles) |
|---|---|---|---|
| | Dyneema® SK75 | Vectran® HT1500 | |
| | (mass%) | (mass%) | |
| 4 | 72 | 28 | 12938 |
| 5 | 64 | 36 | 11720 |
| Comp. exp. B | 100 | 0 | 6833 |

## Claims

1. An abrasion resistant fabric containing ultra-high molecular weight polyethylene (UHMwPE) filaments, thermotropic liquid crystal polymer (LCP) filaments and natural filaments.

2. Fabric according to claim 1 wherein the natural filaments are selected from the group consisting of cotton, hemp, wool, silk, jute and linin.

3. Fabric according to claim 1 wherein the natural filament is cotton.

4. Fabric according to claim 1 to 3 wherein the amount of the UHMwPE filaments is between 20 and 98 mass% from the mass consisting of UHMwPE filaments and thermotropic LCP filaments.

5. Fabric according to claim 4, having an amount of UHMwPE filaments between 50 and 95 mass% from the mass consisting of UHMwPE filaments and thermotropic LCP filaments.

6. Fabric according to claims 1 to 5, wherein the UHMwPE filaments are produced by the gel spinning.

7. Fabric according to claims 1 to 6, wherein the thermotropic LCP is produced by the copolymerization of p-hydroxybenzoic acid and 6-hydroxy-2-naphthoic.

8. Fabric according to any one of claims 1 to 7, wherein said fabric contains an assembled hybrid yarn, the hybrid yarn containing the UHMwPE filaments and the thermotropic LCP filaments.

9. Fabric according to any of the claims 1 - 8 wherein the filaments are staple filaments.

10. Use of the fabric of any of the claims 1 - 9 as protective means.

11. A protective cover comprising the fabric of any of the claims 1 - 9.

12. Use of the protective cover of claim 11 wherein the protective cover is an article of apparel to protect the person wearing that article from injury.

13. Use of the protective cover of claim 11 to protect ropes or roundslings against abrasion and other mechanical impacts.
